(19) Europäisches Patentamt
European Patent Office
Office européen des brevets

(11) Publication number: **0 455 287 B1**

(12) **EUROPEAN PATENT SPECIFICATION**

(45) Date of publication of patent specification: **02.08.95**

(51) Int. Cl.6: **A01N 57/34**, C07F 9/54

(21) Application number: **91200883.6**

(22) Date of filing: **12.04.91**

(54) **Fungicidal compounds and compositions containing tris(aryl)-phosphonium salts.**

(30) Priority: **17.04.90 EP 90107220**

(43) Date of publication of application:
**06.11.91 Bulletin 91/45**

(45) Publication of the grant of the patent:
**02.08.95 Bulletin 95/31**

(84) Designated Contracting States:
**AT BE CH DE DK ES FR GB GR IT LI LU NL SE**

(56) References cited:
**EP-A- 0 300 574**
**US-A- 4 173 463**
**US-A- 4 187 300**
**US-A- 4 251 522**
**US-A- 4 396 777**

**Bull. Chem. Soc. Jap. 56, 2869-70 (1983)**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Becher, Heinz-Manfred**
**Pfarrer Heberer Str. 5**
**W-6530 Bingen (DE)**
Inventor: **Albert, Guido**
**Volxheimer Str. 4**
**W-6551 Hackenheim (DE)**
Inventor: **Curtze, Jürgen**
**Rheingaublick 6**
**W-6225 Johannisberg (DE)**

(74) Representative: **Allam, Peter Clerk et al**
**LLOYD WISE, TREGEAR & CO.**
**Norman House**
**105-109 Strand**
**London WC2R 0AE (GB)**

EP 0 455 287 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to fungicidal compositions containing tris(aryl)phosphonium compounds, some of which are novel, and their use as fungicides.

It is known that many quaternary phosphonium salts are useful as bactericides (Jap. 18876/65), herbicides (US 3,268,323; EP 73574) and nematicides (SA 67/3603). Also US 4,251,522 and EP 28493 disclose certain phenoxybenzylphosphonium salts and tris(aryl)alkyl phosphonium salts respectively which have fungicidal activity. However, many of these compounds, particularly alkyl-triphenyl phosphonium salts, show moderate to strong phytotoxicity when applied to plants or their activity against various fungi is too weak at non-phytotoxic concentrations. In particular, such phytopathogenic fungi as Botrytis cinerea or Plasmopara viticola are not well controlled by these compounds.

In addition, Phosphorus, 6, (1976), 83-88 discloses trityl-tris(4-methylphenyl)phosphonium perchlorate, trityl-diphenyl(4-methylphenyl)phosphonium perchlorate, tri(4-methylphenyl)methyl-tris(4-methylphenyl)-phosphonium perchlorate and tri(4-methylphenyl)methyl-diphenyl(4-methylphenyl) phosphonium perchlorate and Z.anorg. allg. Chem., 551, (1987), 179-90 discloses 4-methylphenyl-tris(4-methyl-phenyl)phosphonium hydrogen dibromide, 4-methylphenyl-tris(4-methylphenyl)phosphonium hydrogen diiodide and 4-methyl-phenyl-tris(4-methyl-phenyl)phosphonium hydrogen bromide chloride. However, neither of these documents gives any indication that the compounds disclosed therein possess any fungicidal activity.

It has now been found that substituted aralkyl-tris (aryl)-phosphonium salts surprisingly show an excellent fungicidal activity, particularly against Botrytis cinerea and Plasmopara viticola, at low dosages and without phytotoxicity.

According to the present invention there is therefore provided a fungicidal composition which comprises a carrier and, as active ingredient, a compound of the general formula

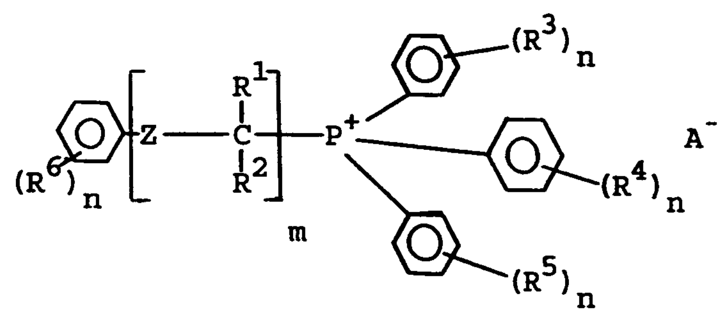

(I)

wherein

| | |
|---|---|
| $R^1$ and $R^2$ | independently represent hydrogen; $C_1$-$C_8$-alkyl optionally substituted by one or more of the same or different halogen atoms; or phenyl optionally substituted by one or more of the same or different halogen atoms or $C_1$-$C_4$-alkyl or $C_1$-$C_4$-haloalkyl; |
| $R^3$, $R^4$ and $R^5$ | independently represent $C_1$-$C_{10}$-alkyl or alkoxy optionally substituted by one or more of the same or different halogen atoms, and $R^4$ and $R^5$ may additionally independently represent hydrogen; and |
| $R^6$ | represents hydrogen or halogen or $C_1$-$C_6$-alkyl or alkoxy optionally substituted by one or more of the same or different halogen atoms; |
| $A^-$ | represents an anion; |
| m | is 0 or 1; |
| each n | independently represents an integer from 1 to 3; |

and

Z represents a single bond, $-CH_2-$, $-CH_2-CH_2-$, $-CH=CH-$, $-0(CH_2)_n-$ or $-C(CH_3)_2-$, with the proviso that when Z is a single bond $R^1$ and $R^2$ are not simultaneously hydrogen.

Alkyl as substituent or as part of other substituents, such as haloalkyl or alkoxy, may be straight-chain or branched and may contain up to 12, preferably up to 6, and especially up to 4, carbon atoms, individual examples including:- methyl, ethyl, propyl, butyl, pentyl, hexyl, etc. as well as their isomers such as isopropyl, isobutyl, tertiary-butyl, isopentyl etc. Halogen represents fluorine, chlorine, bromine or iodine. Preferably, $A^-$ is an anion of an inorganic or organic acid and may be any anion. However, those anions which are not phytotoxic are preferred. Examples of such anions include halides, thiocyanates, salicylates, saccharinates and optionally substituted alkyl or aralkyl sulphonates.

The compounds according to general formula I are oils, gums, or, predominantly, crystalline solid materials at room temperature. They are superior through their valuable fungicidal properties. For example, they can be used in agriculture or related fields for the control of phytopathogenic fungi such as Botrytis cinerea or Plasmopara viticola in vine. The compounds of general formula I according to the invention possess a high fungicidal activity within a wide concentration range and may be used in agriculture without any difficulties.

Good results in terms of control of phytopathogenic fungi have been obtained with a compound as defined in formula I wherein

| | |
|---|---|
| $R^1$ and $R^2$ | independently represent hydrogen, $C_1$-$C_4$-alkyl, especially methyl, or phenyl, |
| $R^3$, $R^4$ and $R^5$ | independently represent $C_1$-$C_6$-alkyl or alkoxy, especially methyl, ethyl, butyl or methoxy, |
| $R^6$ | is hydrogen or $C_1$-$C_4$-alkyl, especially methyl, and |
| $A^-$ | is chloride, bromide or iodide, |

Particularly preferred compounds are those as defined above wherein Z represents $-CH_2-CH_2-$

Especially preferred are those compounds in which $R^1$ represents hydrogen or phenyl, $R^2$ represents hydrogen, methyl or phenyl, $R^3$, $R^4$ and $R^5$ independently represent methyl, ethyl, butyl or methoxy, $R^6$ represents hydrogen or methyl, Z represents a single bond, $-CH_2-$, $-CH_2-CH_2-$, $-CH=CH-$, $-O-CH_2-CH_2-$, $-O-(CH_2)_3-$, m is 0 or 1, n is 1 or 2, and $A^-$ represents a chloride, bromide or iodide anion.

Certain compounds of formula I are novel per se and the present invention therefore also provides compounds of the general formula I as defined above with the provisos that:-

(i) when m is 0 and $A^-$ represents $HBr_2^-$, $HI_2^-$ or $BrHCl^-$, then $(R^3)_n$, $(R^4)_n$, $(R^5)_n$ and $(R^6)_n$ do not simultaneously represent a 4-methyl group;

(ii) when m is 1, Z represents a single bond, $A^-$ represents $ClO_4^-$ and $(R^3)_n$, $(R^4)_n$ and $(R^5)_n$ simultaneously represent a 4-methyl group, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group; and

(iii) when m is 1, Z represents a single bond, $A^-$ represents $ClO_4^-$, $(R^3)_n$ represents a 4-methyl group and $(R^4)_n$ and $(R^5)_n$ both represent a hydrogen atom, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group.

The present invention also provides a process for the preparation of a compound of formula I as defined in the preceding paragraph characterised in that a phosphine of general formula II

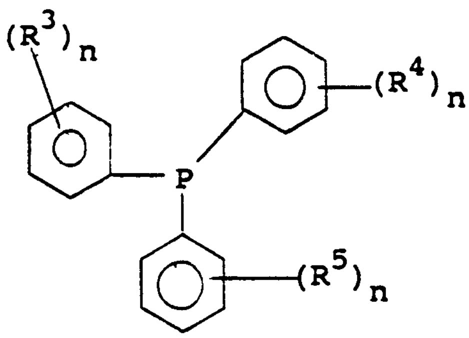

(II)

wherein

n, $R^3$, $R^4$ and $R^5$ are as hereinbefore defined, is reacted with an aralkyl halide of general formula III

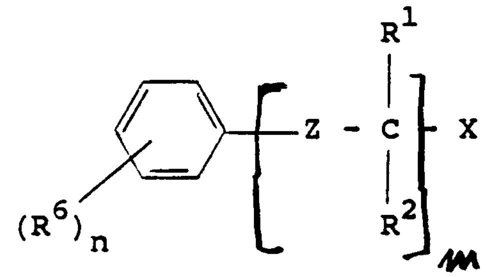

(III)

wherein
Z, $R^1$ $R^2$ $R^6$ m and n are as hereinbefore defined, and X is halogen, to produce a compound of formula I in which $A^-$ is $X^-$, optionally followed by exchange of $X^-$ for another anion $A^-$.

The reaction of the phosphine II with the aralkyl halide III may be carried out in a way known in principle, whereby, if practicable, inert solvents which do not interfere with the reaction or solvents which promote the reaction are used, e.g. acetonitrile, acetone, toluene, dioxane, tetrahydrofuran. Also mixtures of such solvents, e.g. toluene and acetonitrile, are advantageous. According to the reactivity of the components, the reaction may be carried out with cooling, at room temperature or at elevated temperature up to the boiling point of the reaction mixture. Generally, temperatures above 50 °C are preferred. Subsequently, the anion may be exchanged for another one by known methods. The starting materials of general formulae II and III are known or may be obtained by processes analogous to known processes.

The compounds according to the invention are excellent fungicides, especially for the control of phytopathogenic fungi in agriculture or related fields. They are particularly useful for the control of Botrytis cinerea or Plasmopara viticola. Due to the excellent plant tolerance, the compounds can be used in all cultivation of plants where infection by the controllable fungi is not desired, e.g. vine, strawberries, beans, ornamental plants.

The invention also provides a method of making a fungicidal composition which comprises bringing a compound of formula I as defined above into association with at least one carrier. Such a composition may contain a single compound or a mixture of several compounds of the present invention. Preferably, at least one carrier in a composition according to the invention is a surface-active agent. For example, the composition may contain at least two carriers, at least one of which is a surface-active agent.

The compounds according to general formula I may be used as such, however, they are preferably used as compositions comprising, besides the compounds according to the invention, adjuvants and auxiliaries which are known for formulation purposes and are manufactured into e.g. emulsion concentrates, solutions which may be sprayed directly or diluted, diluted emulsions, wettable powders, soluble powders, dusts, granulates or microencapsulates by well-established procedures. Because of the ionic nature of the compounds according to general formula I special attention has to be paid to the compatibility of the formulation adjuvants and auxilliaries with the active ingredients. In general, non-ionic substances are preferred. The form of application such as spraying, atomising, dispersing, pouring may be chosen, like the compositions, according to the desired objectives and the given circumstances.

The formulations, i.e. the compositions which comprise at least one compound according to general formula I and optionally solid and/or liquid auxiliaries and adjuvants, may be prepared by well-established procedures, e.g. intensive mixing and/or grinding of the active ingredients with other substances, such as fillers, solvents, solid carriers, and optionally surface-active compounds (tensides).

Solvents may be aromatic hydrocarbons, preferably the fractions $C_8$ to $C_{12}$, e.g. xylenes or xylene mixtures, substituted naphthalenes, phthalic acid esters, such as dibutyl or dioctyl phthalate, aliphatic hydrocarbons, e.g. cyclohexane or paraffins, alcohols and glycols as well as their ethers and esters, e.g. ethanol, ethyleneglycol mono- and dimethyl ether, ketones such as cyclohexanone, strongly polar solvents such as N-methyl 2-pyrrolidone, dimethyl sulphoxide, alkyl formamides, epoxidised vegetable oils, e.g. epoxidised coconut or soybean oil, water, or mixtures thereof.

Solid carriers, which may be used for dusts or dispersible powders, may be mineral fillers, such as calcite, talc, kaolin, montmorillonite, attapulgite. The physical properties may be improved by addition of highly dispersed silica gel or highly dispersed polymers. Carriers for granulates may be porous material, e.g. pumice, broken brick, sepiolite, bentonite, non-sorptive carriers may be calcite or sand. Additionally, a multitude of pre-granulated inorganic or organic materials may be used, such as dolomite or crushed plant residues.

Suitable surface-active substances may be non-ionic, anionic or cationic tensides with good dispersing, emulsifying and wetting properties depending on the nature of the compounds according to general formula I to be formulated. Due to the ionic nature of the active ingredients, non-ionic tensides are preferred over anionic or cationic synthetic tensides. Tensides may also mean mixtures of tensides.

Non-ionic tensides are preferably polyglycolether derivatives of aliphatic or cycloaliphatic alcohols, saturated or non-saturated fatty acids and alkylphenols, which have 3 to 10 glycol ether groups and 8 to 20 carbon atoms in the (aliphatic) hydrocarbon residue and 6 to 18 carbon atoms in the alkyl residue of the alkyl phenols.

Other suitable non-ionic tensides are the water-soluble, 20 to 250 ethylene glycol ether groups and 10 to 100 propylene glycol ether groups containing polyadducts of ethylene oxide and polypropylene glycol, ethylene diamino polypropylene glycol and alkyl polypropylene glycol with 1 to 10 carbon atoms in the alkyl moiety, the substances normally contain 1 to 5 ethylene glycol units per propylene glycol unit.

Examples of non-ionic tensides are nonylphenol polyethoxy ethanols, castor oil polyglycol ether, polyadducts of ethylene oxide and polypropylene, tributyl phenoxy polyethoxy ethanol, polyethylene glycol, octyl phenoxy polyethoxy ethanol.

Furthermore, fatty acid esters of polyoxy ethylene sorbitan, such as polyoxy ethylene sorbitan trioleate may be used.

As anionic surface-active substances synthetic tensides are preferably used, especially fatty sulphonates, fatty sulphates, sulphonated benzimidazole derivatives or alkyl aryl sulphonates.

The fatty sulphates or fatty sulphonates are normally used as alkali, alkali earth or optionally-substituted ammonium salts and have an alkyl moiety of 8 to 22 carbon atoms, whereby alkyl also means the alkyl moiety of acyl residues, such as the sodium or calcium salt of lignin sulphonic acid, of sulphuric acid dodecylate or of a mixture of fatty alcohols prepared from natural fatty acids. This also includes the salts of sulphuric acid esters, sulphonic acids and adducts of fatty alcohols and ethylene oxide. The sulphonated benzimidazole derivatives preferably contain 2 sulphonic acid residues and a fatty acid residue with 8 to 22 carbon atoms. Alkyl aryl sulphonates are, for example, the sodium, calcium or triethyl ammonium salts of dodecyl benzene sulphonic acid, dibutyl naphthalene sulphonic acid or of a condensate of naphthalene sulphonic acid and formaldehyde.

Cationic tensides preferably are quarternary ammonium salts, which have at least one alkyl residue with 8 to 22 carbon atoms and, furthermore, low, optionally-halogenated alkyl, benzyl or hydroxyalkyl residues. The salts are preferably halides, methyl sulphates or alkyl sulphates, e.g. stearyl trimethyl ammonium chloride or benzyl bis(2-chloroethyl) ethyl ammonium bromide.

The tensides generally used for compositions are disclosed in such publications as:

"McCutheon's Detergents and Emulsifiers Annual", MC Publishing Corp., Ridgewood, NJ, USA 1981;

H. Stache, "Tensid-Taschenbuch", 2nd ed., C. Hanser, Munich, Vienna, 1981;

M. and J. Ash, "Encyclopedia of Surfactants", vol. I-III, Chemical Publishing Co., New York, NY, USA 1980-1981.

The pesticidal compositions usually comprise 0.1% to 95%, preferably 0.1% to 80% of at least one compound according to general formula I, 1% to 99.9% of a solid or liquid adjuvant and 0% to 25%, preferably 0.1% to 25%, of a tenside.

The compositions usually comprise:

**Emulsion Concentrates:**

| | | |
|---|---|---|
| Active ingredient: | 1% to 20%, | preferably 5% to 10% |
| Surface-active substance: | 1% to 30%, | preferably 1% to 20% |
| Liquid carrier: | 50% to 94%, | preferably 70% to 85% |

**Suspension-Concentrates:**

| | | |
|---|---|---|
| Active ingredient: | 5% to 75%, | preferably 10% to 50% |
| Water: | 94% to 24%, | preferably 88% to 30% |
| Surface-active substance: | 1% to 40%, | preferably 2% to 30% |

**Wettable Powder:**

| | | |
|---|---|---|
| Active ingredient: | 0.5% to 90%, | preferably 1% to 80% |
| Surface-active substance: | 0.5% to 20%, | preferably 1% to 15% |
| Solid carrier: | 5% to 95%, | preferably 15% to 90% |

**Dusts:**

| | | |
|---|---|---|
| Active ingredient: | 0.1% to 10%, | preferably 0.1% to 1% |
| Solid carrier: | 99.9% to 90%, | preferably 99.9% to 99% |

As commodity the compositions may preferably be in a concentrated form whereas the end-user generally employs diluted compositions. The compositions may be diluted to a concentration of 0.001% of active ingredient (a.i.). The doses usually are in the range from 0.01 to 10kg a.i./ha.

The compositions may also comprise other auxiliaries such as stabilizers, defoamers, viscosity controlling agents, thickeners, adhesives, fertilisers or other active ingredients to obtain special effects.

The invention still further provides the use as a fungicide of a compound of the general formula I as defined above or a composition as defined above, especially for the control of phytopathogenic fungi, and a method of combating fungi at a locus which comprises treating the locus, which may be for example plants subject to or subjected to fungal attack, seeds of such plants or the medium in which such plants are growing or are to be grown, with such a compound or composition. In particular, a method for the control of phytopathogenic fungi is provided where a compound or composition as defined above is applied onto a plant or its location.

The following examples further illustrate the present invention.

Example 1

Preparation of 3-Phenylpropyl tris(4-methylphenyl)-phosphonium bromide

$(R^1=R^2=H;\ Z=-CH_2-CH_2-;\ (R^3)_n=(R^4)_n=(R^5)_n=4-CH_3;$
$(R^6)_n=H;\ m=1;\ A^-=Br^-$

Tris(4-methylphenyl)-phosphine (4.56g, 15mmol) and 3-phenylpropyl bromide (2.99g, 15mmol) were refluxed in acetonitrile (20ml) for 4 hours. Subsequently, the solvent was evaporated on a rotary evaporator. The oil residue was triturated with diisopropyl ether whereupon 3-phenylpropyl tris(4-methylphenyl)-phosphonium bromide crystallised. The crystals were collected by vacuum filtration, washed with acetone and dried.

Yield: 6.6g (87% of theoretical).
Mp.: 250 °C

The compounds of formula I listed in Tables 1, 2 and 3 were prepared analogously to Example 1.

Example 2

## Formulation: Emulsion Concentrate

| | |
|---|---|
| active compound | 200g/l |
| ethoxylated castor oil | 100g/l |
| tetrahydrofurfuryl alcohol | 793g/l |
| | |
| density: | 1.093g/l |

Table 1:

m=1, $(R^3)_n=(R^4)_n=(R^5)_n$, $(R^6)_n$=H, $A^-=Br^-$

| No. | Z | $R^1$ | $R^2$ | $(R^3)_n/(R^4)_n/(R^5)_n$ | mp. (°C) |
|---|---|---|---|---|---|
| 1 | -CH=CH- | H | H | 4-$OCH_3$ | 263 |
| 2 | $-CH_2-CH_2-$ | H | H | 4-$OCH_3$ | 220 |
| 3 | -CH=CH- | H | H | 4-$CH_3$ | 303 |
| 4 | $-CH_2-CH_2-$ | H | H | 4-$CH_3$ | 250 |
| 5 | $-CH_2-CH_2-$ | H | H | 4-$C_2H_5$ | 238 |
| 6 | $-CH_2-CH_2-$ | H | H | 4-$C(CH_3)_3$ | 262-264 |
| 7 | $-CH_2-$ | H | H | 4-$CH_3$ | glass |
| 8 | $-CH_2-$ | H | H | 4-$OCH_3$ | glass |
| 9 | - | $C_6H_5$ | $C_6H_5$ | 4-$CH_3$ | 256 |
| 10 | - | H | $C_6H_5$ | 4-$CH_3$ | 276-277 |
| 11 | $-O-CH_2-CH_2-$ | H | H | 4-$CH_3$ | 197-199 |
| 12 | $-C(CH_3)_2-$ | H | H | 4-$CH_3$ | gum |
| 13 | $-O-CH_2-CH_2-$ | H | H | 4-$C(CH_3)_3$ | 173-176 |
| 14 | $-O(CH_2)_3-$ | H | H | 4-$CH_3$ | glass |
| 15 | $-O(CH_2)_3-$ | H | H | 4-$C(CH_3)_3$ | 128-130 |
| 16 | $-CH_2-$ | H | H | 4-$C(CH_3)_3$ | glass |
| 17 | - | H | $CH_3$ | 4-$CH_3$ | glass |
| 18 | $-CH_2-$ | H | $CH_3$ | 4-$CH_3$ | glass |
| 19 | - | H | $CH_3$ | 4-$C(CH_3)_3$ | glass |
| 20 | -CH=CH- | H | H | 4-$C(CH_3)_3$ | 217-220 |
| 21 | $-CH_2-CH_2-$ | H | H | 3-$CH_3$ | 175-176 |

Table 2

m=O, $(R^3)_n=(R^4)_n=(R^5)_n$,

| No. | $(R^3)_n/(R^4)_n/(R^5)_n$ | $(R^6)_n$ | $A^-$ | mp. (°C) |
|---|---|---|---|---|
| 1 | 4-$CH_3$ | 4-$CH_3$ | I | 260-264 |
| 2 | 4-$CH_3$ | H | Cl | 259-262 |

Table 3

m=O, $(R^3)_n=(R^4)_n=(R^5)_n$, $A^-=I^-$

| No. | $(R^3_n)/(R^4)_n/(R^5)_n$ | $(R^6)_n$ | mp. (°C) |
|---|---|---|---|
| 1 | 4-$CH_3$ | 3,4-$(CH_3)_2$ | 227-229 |
| 2 | 4-$CH_3$ | 3-$CH_3$ | |
| 3 | 3-$CH_3$ | 4-$CH_3$ | 207 |

Example 3

A) Berry test for fungicidal activity against Botrytis cinerea:

Berries, having a sugar concentration of 60°-90° Oechsle, were harvested from grapes with about 5 mm of the stalk remaining. Subsequently, the berries were dipped into a solution of the test substance and the cuts were sealed with paraffin. 30-50 berries per test were used.

The berries were stored at room temperature for 2 days and then sprayed with a Biomalz-free suspension of Botrytis cinerea spores containing about 100,000 spores/ml. After spraying, the berries were stored in a humid chamber (100% relative humidity) at 20°-22°C.

At several subsequent dates the infested berries were counted and the efficiency was calculated according to the follwing scheme:

$$WG=100-\sum_{i=AW_1}^{AW_n}\frac{BS_i}{K_i}\times 100$$

$AW_i$ = date of assessment
$BS_i$ = number of infested berries
n = $n^{th}$ assessment
WG = efficiency according to Abbott
K = average from controls ($H_2O$, $H_2O$ + Triton X, $H_2O$ + acetone + Triton X, $H_2O$ + methanol + Triton X)

For the final assessment the compounds were grouped into five categories (Table 4):

1 = better than Euparen® standard
2 = equal to standard

3 = active, but weaker than standard
4 = little activity
5 = no activity
(Euparen® = Tolylfluanid, Dichlofluranid)

Table 4

| Compound | Berry Test (250 ppm) |
|---|---|
| table 1, no. 3 | 2 |
| table 1, no. 4 | 1 |
| table 1, no. 6 | 4 |
| table 1, no. 7 | 2 |
| table 1, no. 10 | 3 |
| table 1, no. 16 | 4 |
| table 1, no. 18 | 2 |
| table 1, no. 19 | 3 |
| table 1, no. 21 | 2 |

B) Fungicidal activty against Botrytis cinerea on Vicia faba L.

Plants of Vicia faba L. var. Ackerperle were grown to the 2-2.5-leaf stage. Then they were treated with a solution of the test compound (100, 50, 25, 12.5 and 6.3 ppm) in water/acetone/Triton X or water/methanol/Triton X. After 3-4 days, the plants were infected with a spore suspension of Botrytis cinerea - (containing 2% of Biomalz) and then kept in a climatic chamber in the dark at a relative humidity of 100% for about 1 day. For the assessment the following scheme was used (Table 5):

0 = no infection
1 = 1-10% infection
2 = 11-40% infection
3 = 41-100% infection

Table 5

| Compound | Concentration a.i. (ppm) | | | |
|---|---|---|---|---|
| | 50 | 25 | 12.5 | 6.25 |
| table 1, no. 6 | 1 | 1 | 3 | 3 |
| table 1, no. 7 | 0 | 0 | 1 | 1 |
| table 1, no. 9 | 2 | 2 | 3 | 3 |
| table 1, no. 10 | 0 | 1 | 2 | 2 |
| table 1, no. 14 | 2 | 2 | 3 | 3 |
| table 1, no. 16 | 2 | 2 | 2 | 3 |
| table 1, no. 17 | 0 | 1 | 1 | 1 |
| table 1, no. 18 | 1 | 1 | 2 | 2 |
| table 1, no. 19 | 3 | 3 | 3 | 3 |
| table 1, no. 21 | 2 | 2 | 2 | 3 |
| table 2, no. 1 | 0 | 0 | 1 | 2 |
| table 2, no. 2 | 0 | 0 | 1 | 1 |
| table 3, no. 1 | 1 | 1 | 1 | 2 |
| table 3, no. 2 | 1 | 1 | 1 | 3 |

C) Fungicidal activity against Venturia inaequalis on Malus sp.

Apple cuttings of the variety Morgenduft, which are about 6 weeks old, were treated with a solution of the test compound (400 ppm) in water/acetone/Triton X or water/methanol/Triton X. After 24 hours the plants were infected with a conidia suspension of Venturia inaequalis (about 50,000 conidia/ml), incubated in a dark climatic chamber at a relative humidity of 100% for 48 hours and, then, kept at a relative humidity of 95-99%, and temperatures of 18-20 °C during the day and 13 °C during the night for about 14 days. For assessment the same scheme as for B) was used Table 6).

Table 6

| Compound | Concentration (400 ppm) |
|---|---|
| table 1, no. 6 | 2.5 |
| table 1, no. 8 | 1 |
| table 1, no. 9 | 2.5 |
| table 1, no. 10 | 2.5 |
| table 1, no. 11 | 1.5 |
| table 1, no. 15 | 2.8 |
| table 1, no. 18 | 2.5 |
| table 1, no. 19 | 1 |
| table 1, no. 20 | 1.3 |
| table 1, no. 21 | 2.5 |
| table 3, no. 1 | 2.5 |
| table 3, no. 2 | 2.8 |

**Claims**

**Claims for the following Contracting States : AT, BE, CH, LI, DE, DK, FR, GB, GR, IT, LU, NL, SE**

**1.** A fungicidal composition which comprises a carrier and, as active ingredient, a compound of the general formula

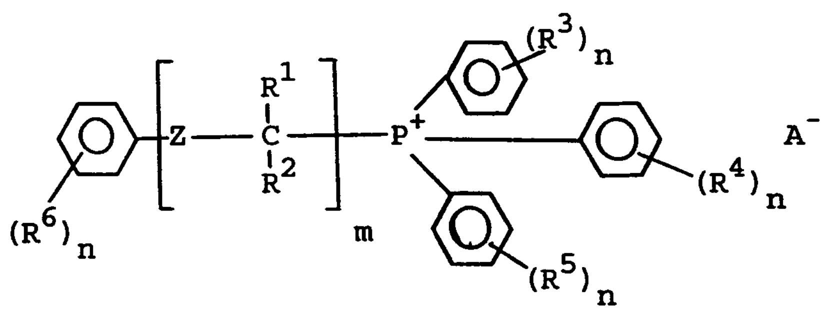

(I)

wherein

| | |
|---|---|
| $R^1$ and $R^2$ | independently represent hydrogen; $C_1$-$C_8$-alkyl optionally substituted by one or more of the same or different halogen atoms; or phenyl optionally substituted by one or more of the same or different halogen atoms or $C_1$-$C_4$-alkyl or $C_1$-$C_4$-haloalkyl; |
| $R^3$, $R^4$ and $R^5$ | independently represent $C_1$-$C_{10}$-alkyl or alkoxy optionally substituted by one or more of the same or different halogen atoms, and $R^4$ and $R^5$ may additionally independently represent hydrogen; |
| $R^6$ | represents hydrogen or halogen or $C_1$-$C_6$-alkyl or alkoxy optionally substituted by one or more of the same or different halogen atoms; |
| $A^-$ | represents an anion; |
| m | is 0 or 1; |

each n independently represents an integer from from 1 to 3;
and Z represents a single bond, $-CH_2-$, $-CH_2-CH_2-$, -CH=CH-, $-0(CH_2)_n-$ or $-C(CH_3)_2-$, with the proviso that when Z is a single bond $R^1$ and $R^2$ are not simultaneously hydrogen.

**2.** A composition as claimed in Claim 1 wherein
$R^1$ and $R^2$ independently represent hydrogen, $C_1$-$C_4$-alkyl or phenyl,
$R^3$, $R^4$ and $R^5$ independently represent $C_1$-$C_6$-alkyl or alkoxy,
$R^6$ is hydrogen or $C_1$-$C_4$-alkyl, and
$A^-$ is chloride, bromide or iodide,

**3.** A composition as claimed in any preceding claim wherein Z represents $-CH_2-CH_2-$.

**4.** A compound of the general formula I as defined in Claim 1 with the provisos that:-
(i) when m is 0 and $A^-$ represents $HBr_2^-$, $HI_2^-$ or $BrHCl^-$, then $(R^3)_n$, $(R^4)_n$, $(R^5)_n$ and $(R^6)_n$ do not simultaneously represent a 4-methyl group;
(ii) when m is 1, Z represents a single bond, $A^-$ represents $ClO_4^-$ and $(R^3)_n$,$(R^4)_n$ and $(R^5)_n$ simultaneously represent a 4-methyl group, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group; and
(iii) when m is 1, Z represents a single bond, $A^-$ represents $ClO_4^-$, $(R^3)_n$ represents a 4-methyl group and $(R^4)_n$ and $(R^5)_n$ both represent a hydrogen atom, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group.

**5.** A process for the preparation of a compound of formula I as defined in Claim 4 characterised in that a phosphine of general formula II

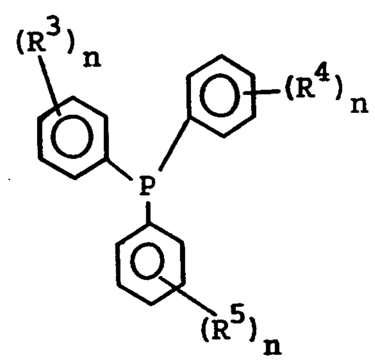

(II)

wherein n, $R^3$, $R^4$ and $R^5$ are as defined in Claim 4 is reacted with an aralkyl halide of general formula III

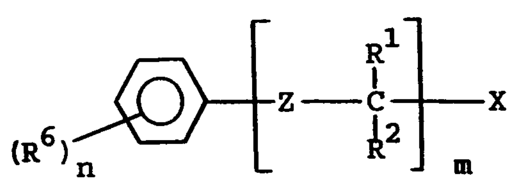

(III)

wherein
Z, $R^1$, $R^2$, $R^6$, m and n are as defined in Claim 4 and X is halogen, to produce a compound of formula I in which $A^-$ is $X^-$, optionally followed by exchange of $X^-$ for another anion $A^-$.

**6.** The use of a compound of general formula I as defined in any one of Claims 1 to 4 for the control of phytopathogenic fungi.

**7.** A method for the control of phytopathogenic fungi characterised in that a compound as defined in any one of Claims 1 to 4 is applied onto a plant or its location.

**Claims for the following Contracting State : ES**

**1.** A fungicidal composition which comprises a carrier and, as active ingredient, a compound of the general formula

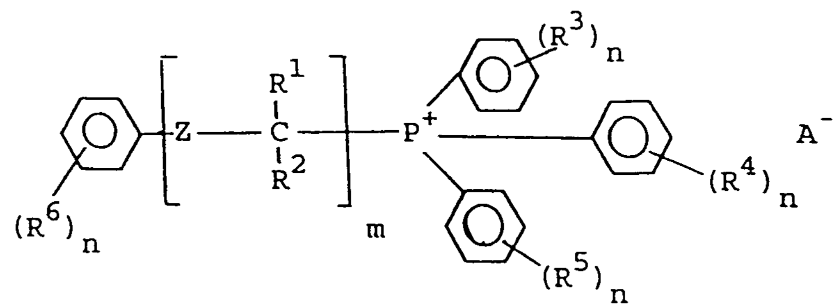

(I)

wherein

| | |
|---|---|
| $R^1$ and $R^2$ | independently represent hydrogen; $C_1$-$C_8$-alkyl optionally substituted by one or more of the same or different halogen atoms; or phenyl optionally substituted by one or more of the same or different halogen atoms or $C_1$-$C_4$-alkyl or $C_1$-$C_4$-haloalkyl; |
| $R^3$, $R^4$ and $R^5$ | independently represent $C_1$-$C_{10}$-alkyl or alkoxy optionally substituted by one or more of the same or different halogen atoms, and $R^4$ and $R^5$ may additionally independently represent hydrogen; |
| $R^6$ | represents hydrogen or halogen or $C_1$-$C_6$-alkyl or alkoxy optionally substituted by one or more of the same or different halogen atoms; |
| $A^-$ | represents an anion; |
| m | is 0 or 1; |
| each n | independently represents an integer from from 1 to 3; |
| and Z | represents a single bond, $-CH_2-$, $-CH_2-CH_2-$, $-CH=CH-$, $0(CH_2)_n-$ or $-C(CH_3)_2-$, with the proviso that when Z is a single bond $R^1$ and $R^2$ are not simultaneously hydrogen. |

**2.** A composition as claimed in Claim 1 wherein

| | |
|---|---|
| $R^1$ and $R^2$ | independently represent hydrogen, $C_1$-$C_4$-alkyl or phenyl, |
| $R^3$, $R^4$ and $R^5$ | independently represent $C_1$-$C_6$-alkyl or alkoxy, |
| $R^6$ | is hydrogen or $C_1$-$C_4$-alkyl, and |
| $A^-$ | is chloride, bromide or iodide, |

**3.** A composition as claimed in any preceding claim wherein Z represents $-CH_2-CH_2-$,

**4.** A composition as claimed in any preceding claim in which the compound of the general formula I is as defined in Claim 1 With the provisos that:-

(i) when m is 0 and $A^-$ represents $HBr_2^-$, $HI_2^-$ or $BrHCl^-$, then $(R^3)_n$, $(R^4)_n$, $(R^5)_n$ and $(R^6)_n$ do not simultaneously represent a 4-methyl group;

(ii) when m is 1, Z represents a single bond, $A^-$ represents $ClO_4^-$ and $(R^3)_n$,$(R^4)_n$ and $(R^5)_n$ simultaneously represent a 4-methyl group, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group; and

(iii) when m is 1, Z represents a single bond, $A^-$ represents $ClO_4^-$, $(R^3)_n$,represents a 4-methyl group and $(R^4)_n$ and $(R^5)_n$ both represent a hydrogen atom, then $R^1$ and $R^2$ do not both represent a phenyl group when $(R^6)_n$ represents a hydrogen atom and $R^1$ and $R^2$ do not both represent a 4-methylphenyl group when $(R^6)_n$ represents a 4-methyl group.

5. A method of making a fungicidal composition which comprises bringing a compound of formula I as defined in any one of claims 1 to 4 into association with at least one carrier.

6. A process for the preparation of a compound of formula I as defined in Claim 4 characterised in that a phosphine of general formula II

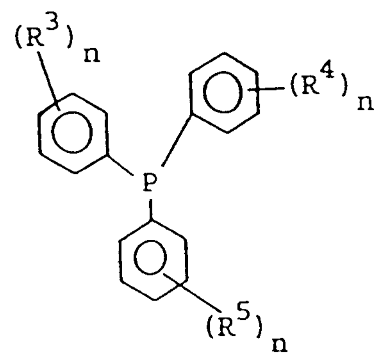

(II)

wherein n, $R^3$, $R^4$ and $R^5$ are as defined in Claim 4 is reacted with an aralkyl halide of general formula III

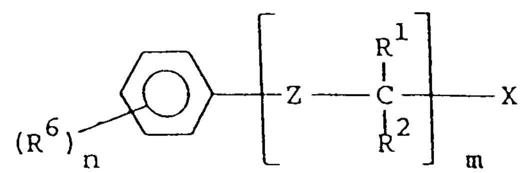

(III)

wherein

Z, $R^1$, $R^2$, $R^6$, m and n are as defined in Claim 4 and X is halogen, to produce a compound of formula I in which $A^-$ is $X^-$, optionally followed by exchange of $X^-$ for another anion $A^-$.

7. The use of a compound of general formula I as defined in any one of Claims 1 to 4 for the control of phytopathogenic fungi.

8. A method for the control of phytopathogenic fungi characterised in that a compound as defined in any one of Claims 1 to 4 is applied onto a plant or its location.

**Patentansprüche**

**Patentansprüche für folgende Vertragsstaaten : AT, BE, CH, LI, DE, DK, FR, GB, GR, IT, LU, NL, SE**

1. Fungizide Zusammensetzung, umfassend einen Träger und als Wirkstoff eine Verbindung der allgemeinen Formel

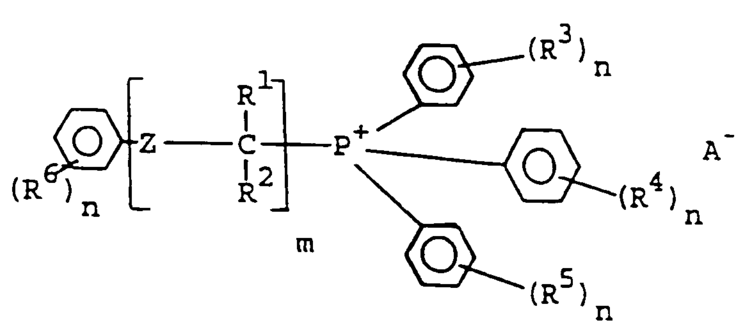

(I)

worin

$R^1$ und $R^2$ unabhängig voneinander Wasserstoff; $C_1$-$C_8$-Alkyl, gegebenenfalls substituiert mit einem oder mehreren der gleichen oder verschiedenen Halogenatome, oder Phenyl, gegebenenfalls substituiert mit einem oder mehreren der gleichen oder verschiedenen Halogenatome oder $C_1$-$C_4$-Alkyl oder $C_1$-$C_4$-Halogenalkyl; darstellen;

$R^3$, $R^4$ und $R^5$ unabhängig voneinander $C_1$-$C_{10}$-Alkyl oder -Alkoxy, gegebenenfalls substituiert mit einem oder mehreren der gleichen oder verschiedenen Halogenatome, darstellen, und $R^4$ und $R^5$ zusätzlich unabhängig voneinander Wasserstoff wiedergeben können;

$R^6$ Wasserstoff oder Halogen oder $C_1$-$C_6$-Alkyl oder -Alkoxy, gegebenenfalls substituiert mit einem oder mehreren der gleichen oder unterschiedlichen Halogenatome, bedeutet;

$A^-$ ein Anion wiedergibt;

m 0 oder 1 ist,

wobei jedes n unabhängig eine ganze Zahl von 1 bis 3 wiedergibt

und Z eine Einfachbindung, $-CH_2-$, $-CH_2-CH_2-$, $-CH=CH-$, $-O(CH_2)_n-$ oder $-C(CH_3)_2-$wiedergibt, mit der Maßgabe, daß, wenn Z eine Einfachbindung ist, $R^1$ und $R^2$ nicht gleichzeitig Wasserstoff sind.

**2.** Zusammensetzung nach Anspruch 1, worin $R^1$ und $R^2$ unabhängig Wasserstoff, $C_1$-$C_4$-Alkyl oder Phenyl wiedergeben,

$R^3$, $R^4$ und $R^5$ unabhängig voneinander $C_1$-$C_6$-Alkyl oder -Alkoxy darstellen,

$R^6$ Wasserstoff oder $C_1$-$C_4$-Alkyl ist und

$A^-$ Chlorid, Bromid oder Jodid darstellt.

**3.** Zusammensetzung nach einem vorangehenden Anspruch, worin Z $-CH_2-CH_2-$ wiedergibt.

**4.** Verbindung der allgemeinen Formel I, wie in Anspruch 1 definiert, mit den Maßgaben, daß:

(i) wenn m 0 ist und $A^-$ $HBr_2^-$, $HI_2^-$ oder $BrHCl^-$ wiedergibt, dann $(R^3)_n$, $(R^4)_n$, $(R^5)_n$ und $(R^6)_n$ nicht gleichzeitig eine 4-Methylgruppe wiedergeben;

(ii) wenn m 1 ist, Z eine Einfachbindung wiedergibt, $A^-$ $ClO_4^-$ bedeutet und $(R^3)_n$, $(R^4)_n$ und $(R^5)_n$ gleichzeitig eine 4-Methylgruppe wiedergeben, dann $R^1$ und $R^2$ nicht beide eine Phenylgruppe darstellen, wenn $(R^6)_n$ ein Wasserstoffatom wiedergibt, und $R^1$ und $R^2$ nicht beide eine 4-Methylphenylgruppe wiedergeben, wenn $(R^6)_n$ eine 4-Methylgruppe darstellt und

(iii) wenn m 1 ist, Z eine Einfachbindung wiedergibt, $A^-$ $ClO_4^-$ bedeutet, $(R^3)_n$ eine 4-Methylgruppe bedeutet und $(R^4)_n$ und $(R^5)_n$ beide ein Wasserstoffatom wiedergeben, dann $R^1$ und $R^2$ nicht beide eine Phenylgruppe wiedergeben, wenn $(R^6)_n$ ein Wasserstoffatom bedeutet, und $R^1$ und $R^2$ nicht beide eine 4-Methylphenylgruppe wiedergeben, wenn $(R^6)_n$ eine 4-Methylgruppe bedeutet.

**5.** Verfahren zur Herstellung einer Verbindung der Formel I, wie in Anspruch 4 definiert, dadurch gekennzeichnet, daß ein Phosphin der allgemeinen Formel II

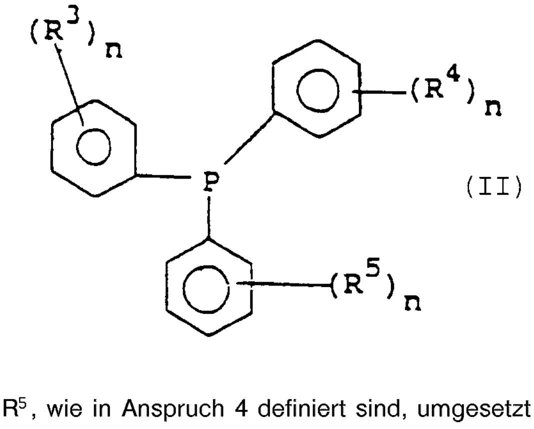

(II)

worin n, $R^3$, $R^4$ und $R^5$, wie in Anspruch 4 definiert sind, umgesetzt wird mit einem Aralkylhalogenid der allgemeinen Formel III

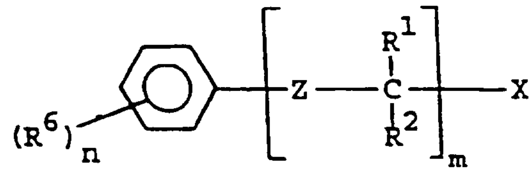

(III)

worin Z, $R^1$, $R^2$, $R^6$, m und n wie in Anspruch 4 definiert sind und X Halogen bedeutet, zu einer Verbindung der Formel I, worin $A^-$ $X^-$ darstellt, gegebenenfalls gefolgt von Austausch von $X^-$ gegen ein anderes Anion $A^-$.

**6.** Verwendung einer Verbindung der allgemeinen Formel I, wie in einem der Ansprüche 1 bis 4 definiert, zur Bekämpfung von phytopathogenen Pilzen.

**7.** Verfahren zur Bekämpfung von phytopathogenen Pilzen, dadurch gekennzeichnet, daß eine Verbindung, wie in einem der Ansprüche 1 bis 4 definiert, auf eine Pflanze oder ihre Umgebung angewendet wird.

**Patentansprüche für folgenden Vertragsstaat : ES**

**1.** Fungizide Zusammensetzung, umfassend einen Träger und als Wirkstoff eine Verbindung der allgemeinen Formel

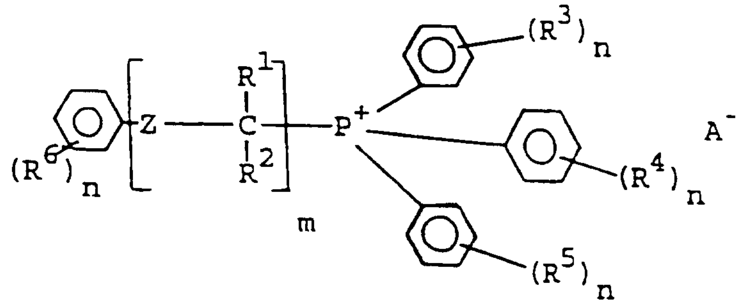

(I)

worin

$R^1$ und $R^2$ unabhängig voneinander Wasserstoff; $C_1$-$C_8$-Alkyl, gegebenenfalls substituiert mit einem oder mehreren der gleichen oder verschiedenen Halogenatome, oder Phenyl, gegebenenfalls substituiert mit einem oder mehreren der gleichen oder verschiedenen Halogenatome oder $C_1$-$C_4$-Alkyl oder $C_1$-$C_4$-Halogenalkyl; darstellen;

$R^3$, $R^4$ und $R^5$ unabhängig voneinander $C_1$-$C_{10}$-Alkyl oder -Alkoxy, gegebenenfalls subsutuiert mit einem oder mehreren der gleichen oder verschiedenen Halogenatome, darstellen, und $R^4$ und $R^5$ zusätzlich unabhängig voneinander Wasserstoff wiedergeben können;

$R^6$ Wasserstoff oder Halogen oder $C_1$-$C_6$-Alkyl oder -Alkoxy, gegebenenfalls substituiert mit einem oder mehreren der gleichen oder unterschiedlichen Halogenatome, bedeutet;

$A^-$ ein Anion wiedergibt;

m 0 oder 1 ist,

wobei jedes n unabhängig eine ganze Zahl von 1 bis 3 wiedergibt

und Z eine Einfachbindung, $-CH_2-$, $-CH_2-CH_2-$, $-CH=CH-$, $-O(CH_2)_n-$ oder $-C(CH_3)_2-$wiedergibt, mit der Maßgabe, daß, wenn Z eine Einfachbindung ist, $R^1$ und $R^2$ nicht gleichzeitig Wasserstoff sind.

**2.** Zusammensetzung nach Anspruch 1, worin $R^1$ und $R^2$ unabhängig Wasserstoff, $C_1$-$C_4$-Alkyl oder Phenyl wiedergeben,

$R^3$, $R^4$ und $R^5$ unabhängig voneinander $C_1$-$C_6$-Alkyl oder -Alkoxy darstellen,

$R^6$ Wasserstoff oder $C_1$-$C_4$-Alkyl ist und

$A^-$ Chlorid, Bromid oder Jodid darstellt.

**3.** Zusammensetzung nach einem vorangehenden Anspruch, worin Z $-CH_2-CH_2-$ wiedergibt.

**4.** Zusammensetzung nach einem vorangehenden Anspruch, wobei die Verbindung der allgemeinen Formel I, wie in Anspruch 1 definiert ist, mit den Maßgaben, daß:

(i) wenn m 0 ist und $A^-$ $HBr_2^-$, $HI_2^-$ oder $BrHCl^-$ wiedergibt, dann $(R^3)_n$, $(R^4)_n$, $(R^5)_n$ und $(R^6)_n$ nicht gleichzeitig eine 4-Methylgruppe wiedergeben;

(ii) wenn m 1 ist, Z eine Einfachbindung wiedergibt, $A^-$ $ClO_4^-$ bedeutet und $(R^3)_n$, $(R^4)_n$ und $(R^5)_n$ gleichzeitig eine 4-Methylgruppe wiedergeben. dann $R^1$ und $R^2$ nicht beide eine Phenylgruppe darstellen, wenn $(R^6)_n$ ein Wasserstoffatom wiedergibt, und $R^1$ und $R^2$ nicht beide eine 4-Methylphenylgruppe wiedergeben, wenn $(R^6)_n$ eine 4-Methylgruppe darstellt und

(iii) wenn m 1 ist, Z eine Einfachbindung wiedergibt, $A^-$ $ClO_4^-$ bedeutet, $(R^3)_n$ eine 4-Methylgruppe bedeutet und $(R^4)_n$ und $(R^5)_n$ beide ein Wasserstoffatom wiedergeben, dann $R^1$ und $R^2$ nicht beide eine Phenylgruppe wiedergeben, wenn $(R^6)_n$ ein Wasserstoffatom bedeutet, und $R^1$ und $R^2$ nicht beide eine 4-Methylphenylgruppe wiedergeben, wenn $(R^6)_n$ eine 4-Methylgruppe bedeutet.

**5.** Verfahren zur Herstellung einer fungiziden Zusammensetzung, umfassend Versetzen einer Verbindung der Formel I, wie in einem der Ansprüche 1 bis 4 definiert, mit mindestens einem Träger.

**6.** Verfahren zur Herstellung einer Verbindung der Formel I wie in Anspruch 4 definiert, dadurch gekennzeichnet, daß ein Phosphin der allgemeinen Formel II

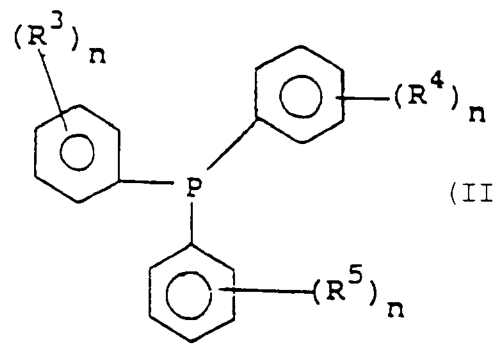

(II)

worin n, $R^3$, $R^4$ und $R^5$ wie in Anspruch 4 definiert sind, umgesetzt wird mit einem Aralkylhalogenid der allgemeinen Formel III

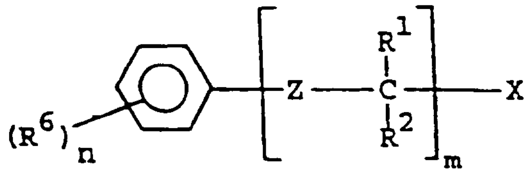

(III)

worin Z, $R^1$, $R^2$, $R^6$, m und n wie in Anspruch 4 definiert sind und X Halogen bedeutet, zu einer Verbindung der Formel I, worin $A^-$ $X^-$ darstellt, gegebenenfalls gefolgt von Austausch von $X^-$ gegen ein anderes Anion $A^-$.

**7.** Verwendung einer Verbindung der allgemeinen Formel I, wie in einem der Ansprüche 1 bis 4 definiert, zur Bekämpfung von phytopathogenen Pilzen.

**8.** Verfahren zur Bekämpfung von phytopathogenen Pilzen, dadurch gekennzeichnet, daß eine Verbindung, wie in einem der Ansprüche 1 bis 4 definiert, auf eine Pflanze oder ihre Umgebung angewendet wird.

**Revendications**

**Revendications pour les Etats contractants suivants : AT, BE, CH, LI, DE, DK, FR, GB, GR, IT, LU, NL, SE**

**1.** Composition fongicide qui comporte un support et, comme ingrédient actif, un composé de formule générale

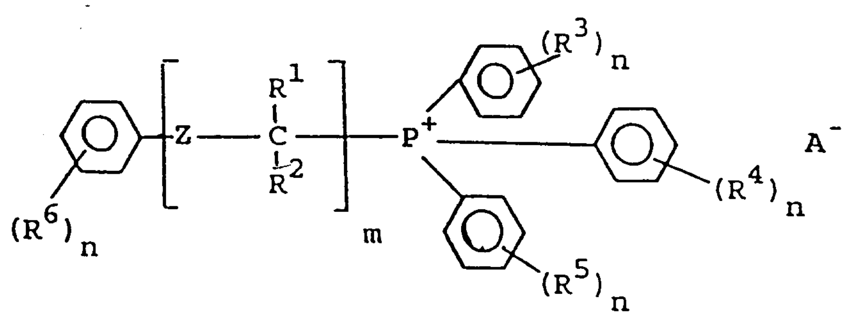

(I)

dans laquelle

| | |
|---|---|
| $R^1$ et $R^2$ | représentent de façon indépendante de l'hydrogène; un $C_1$-$C_8$-alkyle substitué de façon optionnelle par un ou plusieurs des mêmes ou de différents atomes d'halogène; ou un phényle substitué de façon optionnelle par un ou plusieurs des mêmes ou de différents atomes d'halogène ou un $C_1$-$C_4$-alkyle ou un haloalkyle en $C_1$-$C_4$; |
| $R^3$, $R^4$ et $R^5$ | représentent de façon indépendante un $C_1$-$C_{10}$-alkyle ou alkoxy substitué de façon optionnelle par un ou plusieurs des mêmes ou de différents atomes d'halogène; et $R^4$ et $R^5$ peuvent de plus représenter de façon indépendante de l'hydrogène; et |
| $R^6$ | représente de l'hydrogène ou un halogène ou un $C_1$-$C_6$-alkyle ou alkoxy substitué de façon optionnelle par un ou plusieurs des mêmes ou de différents atomes d'halogène; |
| $A^-$ | représente un anion; |
| m | est égal à 0 ou 1; |
| chaque n | représente de façon indépendante un entier compris entre 1 et 3; |
| et Z | représente une liaison simple, $-CH_2-$, $-CH_2-CH_2-$, $-CH=CH-$, $-O(CH_2)_n-$ ou $-C(CH_3)_2-$, étant entendu que, lorsque Z est une liaison simple, $R^1$ et $R^2$ ne sont pas simultanément de l'hydrogène. |

**2.** Composition selon la revendication 1 dans laquelle

| | |
|---|---|
| $R^1$ et $R^2$ | représentent de façon indépendante de l'hydrogène, un $C_1$-$C_4$-alkyle ou du phényle, |
| $R^3$, $R^4$ et $R^5$ | représentent de façon indépendante un $C_1$-$C_6$-alkyle ou alkoxy, |
| $R^6$ | est de l'hydrogène ou un $C_1$-$C_4$-alkyle, et |
| $A^-$ | est du chlorure, du bromure ou de l'iodure. |

**3.** Composition selon l'une quelconque des revendications précédentes, dans laquelle Z représente $-CH_2-CH_2-$.

**4.** Composé de formule générale I tel que défini dans la revendication 1 étant entendu que:

(i) lorsque m est égal à 0 et $A^-$ représente $HBr_2^-$, $HI_2^-$ ou $BrHCl^-$, alors $(R^3)_n$, $(R^4)_n$, $(R^5)_n$ et $(R^6)_n$ ne représentent pas simultanément un groupe 4-méthyle;

(ii) lorsque m est égal à 1, Z représente une liaison simple, $A^-$ représente $ClO_4^-$ et $(R^3)_n$, $(R^4)_n$ et $(R^5)_n$ représentent simultanément un groupe 4-méthyle, alors $R^1$ et $R^2$ ne représentent pas tous deux un groupe phényle lorsque $(R^6)_n$ représente un atome d'hydrogène et $R^1$ et $R^2$ ne représentent pas tous deux un groupe 4-méthylphényle lorsque $(R^6)_n$ représente un groupe 4-méthyle; et

(iii) lorsque m est égal à 1, Z représente une liaison simple, $A^-$ représente $ClO_4^-$, $(R^3)_n$ représente un groupe 4-méthyle et $(R^4)_n$ et $(R^5)_n$ représentent tous deux un atome d'hydrogène, alors $R^1$ et $R^2$ ne représentent pas tous deux un groupe phényle lorsque $(R^6)_n$ représente un atome d'hydrogène et

$R^1$ et $R^2$ ne représentent pas tous deux un groupe 4-méthylphényle lorsque $(R^6)_n$ représente un groupe 4-méthyle.

**5.** Procédé pour la préparation d'un composé de formule I tel que défini dans la revendication 4 caractérisé en ce que l'on fait réagir une phosphine de formule générale II

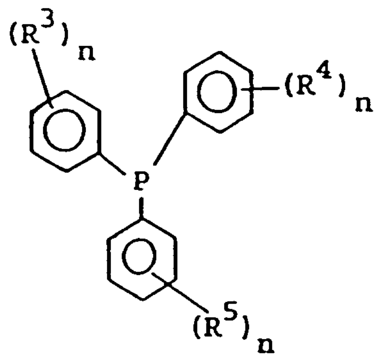

(II)

dans laquelle n, $R^3$, $R^4$ et $R^5$ sont tels que définis dans la revendication 4, avec un halogénure d'aralkyle de formule générale III

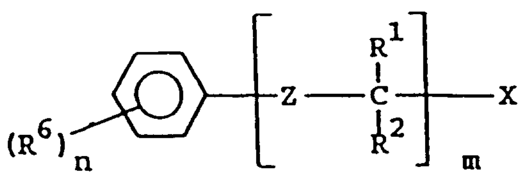

(III)

dans laquelle Z, $R^1$, $R^2$, $R^6$, m et n sont tels que définis dans la revendication 4 et X est un halogène, pour produire un composé de formule I dans laquelle $A^-$ est $X^-$, suivi optionnellement par l'échange de $X^-$ contre un autre anion $A^-$.

**6.** Utilisation d'un composé de formule générale I tel que défini dans l'une quelconque des revendications 1 à 4 pour le contrôle de champignons phytopathogènes.

**7.** Procédé pour le contrôle de champignons phytopathogènes caractérisé en ce qu'un composé tel que défini dans l'une quelconque des revendications 1 à 4 est appliqué sur une plante ou son emplacement.

**Revendications pour l'Etat contractant suivant : ES**

**1.** Composition fongicide qui comporte un support et, comme ingrédient actif, un composé de formule générale

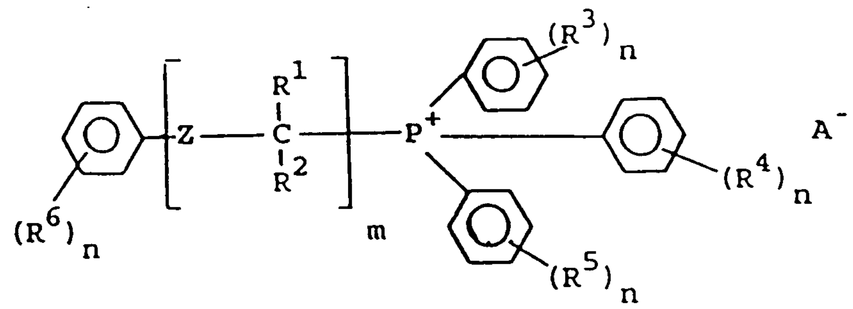

(I)

dans laquelle

$R^1$ et $R^2$ représentent de façon indépendante de l'hydrogène; un $C_1$-$C_8$-alkyle substitué de façon optionnelle par un ou plusieurs des mêmes ou de différents atomes d'halogène; ou un phényle substitué de façon optionnelle par un ou plusieurs des mêmes ou de différents atomes d'halogène ou un $C_1$-$C_4$-alkyle ou un haloalkyle en $C_1$-$C_4$;

$R^3$, $R^4$ et $R^5$ représentent de façon indépendante un $C_1$-$C_{10}$-alkyle ou alkoxy substitué de façon optionnelle par un ou plusieurs des mêmes ou de différents atomes d'halogène; et $R^4$ et $R^5$ peuvent de plus représenter de façon indépendante de l'hydrogène; et

$R^6$ représente de l'hydrogène ou un halogène ou un $C_1$-$C_6$-alkyle ou alkoxy substitué de façon optionnelle par un ou plusieurs des mêmes ou de différents atomes d'halogène;

$A^-$ représente un anion;

m est égal à 0 ou 1;

chaque n représente de façon indépendante un entier compris entre 1 et 3;

et Z représente une liaison simple, $-CH_2-$, $-CH_2-CH_2-$, $-CH=CH-$, $-O(CH_2)_n-$ ou $-C(CH_3)_2-$, étant entendu que, lorsque Z est une liaison simple, $R^1$ et $R^2$ ne sont pas simultanément de l'hydrogène.

**2.** Composition selon la revendication 1 dans laquelle

$R^1$ et $R^2$ représentent de façon indépendante de l'hydrogène, un $C_1$-$C_4$-alkyle ou du phényle,

$R^3$, $R^4$ et $R^5$ représentent de façon indépendante un $C_1$-$C_6$-alkyle ou alkoxy,

$R^6$ est de l'hydrogène ou un $C_1$-$C_4$-alkyle, et

$A^-$ est du chlorure, du bromure ou de l'iodure.

**3.** Composition selon l'une quelconque des revendications précédentes, dans laquelle Z représente $-CH_2-CH_2-$.

**4.** Composition telle que définie dans l'une quelconque des revendications précédentes dans lesquelles le composé de formule générale I est tel que défini dans la revendication 1 étant entendu que :

(i) lorsque m est égal à 0 et $A^-$ représente $HBr_2^-$, $HI_2^-$ ou $BrHCl^-$, alors $(R^3)_n$, $(R^4)_n$, $(R^5)_n$ et $(R^6)_n$ ne représentent pas simultanément un groupe 4-méthyle;

(ii) lorsque m est égal à 1, Z représente une liaison simple, $A^-$ représente $ClO_4^-$ et $(R^3)_n$, $(R^4)_n$ et $(R^5)_n$ représentent simultanément un groupe 4-méthyle, alors $R^1$ et $R^2$ ne représentent pas tous deux un groupe phényle lorsque $(R^6)_n$ représente un atome d'hydrogène et $R^1$ et $R^2$ ne représentent pas tous deux un groupe 4-méthylphényle lorsque $(R^6)_n$ représente un groupe 4-méthyle; et

(iii) lorsque m est égal à 1, Z représente une liaison simple, $A^-$ représente $ClO_4^-$, $(R^3)_n$ représente un groupe 4-méthyle et $(R^4)_n$ et $(R^5)_n$ représentent tous deux un atome d'hydrogène, alors $R^1$ et $R^2$ ne représentent pas tous deux un groupe phényle lorsque $(R^6)_n$ représente un atome d'hydrogène et $R^1$ et $R^2$ ne représentent pas tous deux un groupe 4-méthylphényle lorsque $(R^6)_n$ représente un groupe 4-méthyle.

**5.** Procédé de préparation d'une composition fongicide qui comprend la mise en association d'un composé de formule I telle que définie dans l'une quelconque des revendications 1 à 4 avec au moins un support.

6. Procédé pour la préparation d'un Composé de formule I tel que défini dans la revendication 4 caractérisé en ce que l'on fait réagir une phosphine de formule générale II

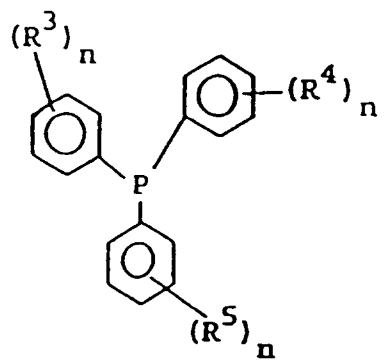

(II)

dans laquelle n, $R^3$, $R^4$ et $R^5$ sont tels que définis dans la revendication 4, avec un halogénure d'aralkyle de formule générale III

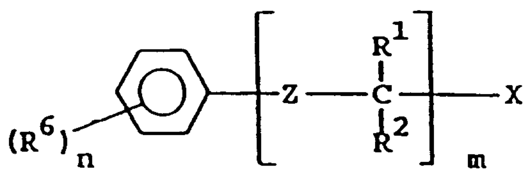

(III)

dans laquelle Z, $R^1$ $R^2$, $R^6$, m et n sont tels que définis dans la revendication 4 et X est un halogène, pour produire un composé de formule I dans laquelle $A^-$ est $X^-$, suivi optionnellement par l'échange de $X^-$ contre un autre anion $A^-$.

7. Utilisation d'un composé de formule générale I tel que défini dans l'une quelconque des revendications 1 à 4 pour le contrôle de champignons phytopathogènes.

8. Procédé pour le contrôle de champignons phytopathogènes caractérisé en ce qu'un composé tel que défini dans l'une quelconque des revendications 1 à 4 est appliqué sur une plante ou son emplacement.